# EUROPÄISCHE PATENTSCHRIFT

(11) **EP 0 422 539 B1**
(45) Veröffentlichungstag und Bekanntmachung des Hinweises auf die Patenterteilung: **28.12.1994**
(21) Anmeldenummer: 90119220.3
(22) Anmeldetag: 06.10.1990
(51) Int. Cl.: H02K 23/58, H02K 29/00

(54) **Elektrische Maschine mit einem Rotor und einem Stator**
Electrical machine with a rotor and a stator
Machine électrique ayant un rotor et un stator

(30) Priorität: 10.10.1989 DE 3933790
(43) Veröffentlichungstag der Anmeldung: 17.04.1991
(73) Patentinhaber: Anwander, Werner, D-87466 Oy-Mittelberg (DE)
(72) Erfinder: Anwander, Werner, D-87466 Oy-Mittelberg (DE)
(74) Vertreter: Hutzelmann, Gerhard

(56) Entgegenhaltungen:
- EP-A- 0 230 639
- WO-A-89/02671
- DE-A- 1 488 529
- DE-A- 3 113 532
- DE-U- 1 958 553
- US-A- 3 459 976
- US-A- 4 287 457
- PATENT ABSTRACTS OF JAPAN, vol. 1, no. 104 (E-77)(3366) 14 September 1977; & JP-A-52 036702
- PATENT ABSTRACTS OF JAPAN, vol. 4, no. 126 (E-24)(608) 05 September 1980; & JP-A-55 079670
- PATENT ABSTRACTS OF JAPAN, vol. 9, no. 291 (E-359)(2014) 19 November 1985; & JP-A-60 131066 (

## Beschreibung

Die Erfindung betrifft eine elektrische Maschine mit einem Rotor und einem Stator, in welchen elektrische Spulen bzw. Dauermagnete angeordnet sind, die sich bei der Drehbewegung des Rotors gegenseitig beeinflussen, wobei der Rotor die Magnete und der Stator die Spulen enthält und die Spulen ohne Eisenkern ausgebildet sind und die einzelnen Windungen wenigstens in einem Abschnitt der Spule senkrecht zur Längsachse der Magnete angeordnet sind, wobei sich wenigstens ein Abschnitt der Spulen quer über den Rotorumfang erstreckt.

Aus der US-A-4 287 457 ist eine elektromagnetische Dreheinrichtung mit einem Rotor und einem Stator mit elektrischen Spulen und einem Dauermagneten, die sich bei der Drehbewegung des Rotors gegenseitig beeinflussen, bekannt. Die Spulen sind dabei ohne Eisenkern ausgebildet und einzelne Windungen in einem Abschnitt der Spule senkrecht zur Längsachse des Magneten angeordnet.

Bei dieser elektromagnetischen Dreheinrichtung ist nur ein Magnet vorgesehen. Außerdem führt der Rotor nur eine Drehbewegung von maximal 180° aus. Die Drehbewegung des Rotors wird durch zwei Hemmer begrenzt, ohne welche die elektromagnetische Dreheinrichtung nicht funktioniert, da sie nicht anlaufen würde. Damit unterscheidet sich die Erfindung grundlegend von der Dreheinrichtung, da mehrere Magneten vorgesehen sind und die Drehbewegung des Rotors nicht auf einen bestimmten Bereich begrenzt ist.

Aus der DE-A-1 488 529 ist eine elektromagnetische Antriebsvorrichtung bekannt, bei der ein Permanentmagnet vorgesehen ist, der sich über die ganze Breite des Rotors erstreckt. Auch bei dieser Antriebsvorrichtung ist ein nur begrenzt schwenkbares Element vorgesehen, während bei der vorliegenden Erfindung eine vollständige Drehbewegung durchgeführt wird.

Aus dem DE-U-1 958 553 ist ein dynamisches Drehmagnetsystem bekannt, bei dem die Spulen schalenförmig ausgebildet sind und innerhalb eines magnetischen Trägers sitzen.

Insbesondere bei der Verwendung einer elektrischen Maschine als Generator hat es sich als störend erwiesen, daß die in der Maschine auch im Stillstand herrschenden Magnetfelder ein hohes Anlaufmoment benötigen um überwunden zu werden.

Der Erfindung liegt die Aufgabe zugrunde, dies zu vermeiden und eine elektrische Maschine vorzuschlagen, die keinerlei Haltekräfte im Stillstand aufweist.

Diese Aufgabe wird erfindungsgemäß dadurch gelöst, daß die seitlich über den Rotor vorstehenden Spulenabschnitte wenigstens annähernd rechtwinklig abgebogen sind und parallel zu den Seiten des Rotors verlaufen.

Durch die Anordnung der Spulen wird ein hoher Wirkungsgrad der Maschine und gleichzeitig kleine Abmessungen der Maschine erzielt. Durch die Verwendung von Spulen ohne Eisenkern ist in den Spulen im Ruhezustand der Maschine kein Magnetfeld vorhanden, so daß der Rotor lediglich die sehr geringe Lagerreibung überwinden muß.

Dadurch ist der Anlaufverlust erheblich reduziert und der Einsatz zum Beispiel als Windgenerator, der auch bei sehr schwachen Winden anläuft, möglich.

Sehr vorteilhaft ist es auch, wenn erfindungsgemäß die in Reihe hintereinander liegenden Magnete wenigstens annähernd tangential am Rotorumfang angeordnet sind und wenn die doppelte Anzahl Magnete als Spulen vorgesehen ist.

Durch diese Anordnung der Magnete und ihre Anzahl in Bezug auf die Spulenanzahl wird ein sehr guter Wirkungsgrad der Maschine erreicht.

Besonders günstig ist es, wenn sich erfindungsgemäß die Dauermagnete über die ganze Breite des Rotors erstrecken.

Damit wird das Verhältnis Baugröße und Leistungsvermögen besonders günstig.

Eine weitere erfindungsgemäße Ausgestaltung ist dadurch gekennzeichnet, daß die hintereinander liegenden Magnete jeweils mit unterschiedlicher Polung aufeinander folgen.

Mit dieser Ausgestaltung wird eine besonders hohe Leistungsausbeute erzielt.

Besonders günstig ist es auch, wenn erfindungsgemäß in der Zuleitung zu den Spulen eine Umpoleinrichtung vorgesehen ist.

Eine weitere vorteilhafte Ausgestaltung der Erfindung liegt auch darin, daß die Spule ringförmig ausgebildet ist, der Rotor in seiner Außenkontur der Spulenform angepaßt ist und sowohl der Rotor als auch seine Lager innerhalb der Spule angeordnet sind.

Sehr vorteilhaft ist es auch, wenn erfindungsgemäß mehrere Rotoren nebeneinander angeordnet sind.

Dabei ist es möglich, daß die Rotoren unmittelbar aneinander anschließen; lediglich für das Dazwischenragen der Spulen ist ein geringer Abstand zweckmäßig.

Desgleichen ist es möglich, daß die Rotoren im Abstand von einander angeordnet sind aber durch eine gemeinsame An- bzw. Abtriebswelle miteinander in Verbindung stehen.

Eine weitere vorteilhafte Ausgestaltung der Erfindung liegt darin, daß auf der die Magnete tragenden Maschinenwelle ein synchron mit dem Innenläufer umlaufender Außenläufer angeordnet ist, der entweder Weicheisenabschnitte enthält, aus einem Weicheisenring besteht oder Dauermagnete enthält und dabei im übrigen aus einem unmagnetischen Werkstoff besteht.

Mit einer derartigen Ausgestaltung ist es möglich, den Wirkungsgrad der Maschine ganz erheblich zu verbessern.

Ebenfalls sehr vorteilhaft ist es, wenn erfindungsgemäß auf einer gemeinsamen Maschinenwelle hintereinander wenigstens zwei, vorzugsweise als Motoren ausgebildete Maschinen angeordnet sind, die unterschiedliche Durchmesser aufweisen.

Bei sonst gleicher Ausgestaltung der Maschine weisen sie aufgrund der unterschiedlichen Durchmesser verschiedene Drehmomente auf, was insbesondere zum Anlaufen ausgenutzt werden kann. Damit kann ein elektrisches Getriebe bewerkstelligt werden, wodurch für viele Anwendungsfälle ein mechanisches Getriebe unnötig wird.

In der Zeichnung ist die Erfindung anhand mehrerer Ausführungsbeispiele veranschaulicht. Dabei Zeigen:
- Fig.1: eine Seitenansicht einer elektrischen Maschine, mit zwei elektrischen Spulen, die einen Rotor übergreifen und seitlich neben diesem abgebogen sind,
- Fig.2: den zugehörigen Rotor ebenfalls in Seitenansicht, mit zwei an dessen Umfang angeordneten Permanentmagneten,
- Fig.3: eine Seitenansicht einer elektrischen Maschine mit vier elektrischen Spulen,
- Fig.4: eine zugehörigen Rotor mit vier Permanentmagneten,
- Fig.5: eine Darstellung der elektrischen Maschine, wobei sich ein Permanentmagnet des Rotors gerade zwischen zwei Spulen befindet,
- Fig.6: eine weitere Darstellung der elektrischen Maschine, mit weitergedrehtem Rotor, so daß der Permanentmagnet innerhalb einer Spule liegt,
- Fig.7: ein Ausführungsbeispiel eines Rotors, bei dem sich die Permanentmagneten über die ganze Breite der Rotorscheibe erstrecken,
- Fig.8: ein Ausführungsbeispiel, bei dem die Spulen den Rotor U-förmig umgreifen und eng an diesem anliegen,
- Fig.9: eine elektrische Maschine deren Rotorlagerung innerhalb der Statorspule angeordnet ist,
- Fig.10: eine weitere Ansicht dieser Maschine mit radial herausgeführter Rotorlagerung,
- Fig.11: eine Doppelmaschine, mit zwei auf einer gemeinsamen Welle angeordneten Rotoren sowie zwei Statorspulen, wobei zwischen beiden auf der gemeinsamen Welle eine Ab- bzw. Antriebsscheibe angeordnet ist,
- Fig.12: eine elektrische Maschine mit vier Spulen und acht um Umfang des Rotors angeordneten Permanentmagneten,
- Fig.13: die gleiche Maschine in etwas weitergedrehter Position des Rotors,
- Fig. 14: eine schematisierte Ansicht einer Maschine mit Innen- und Außenläufer,
- Fig.15: einen Längsschnitt durch die Maschine nach Fig. 14 und
- Fig.16: einen Längsschnitt durch eine Anordnung von zwei Maschinen auf einer gemeinsamen Welle.

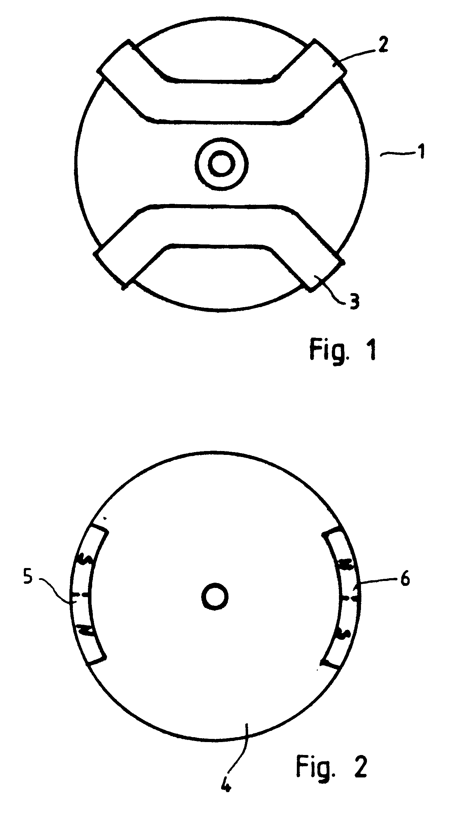

Mit 1 ist in Fig.1 eine elektrische Maschine bezeichnet, bei der es sich sowohl um einen Motor als auch um einen Generator handeln kann. Zwei aus elektrisch gut leitfähigem Material gewickelte Spulen 2 und 3 bilden den Stator, während der Rotor von einer Scheibe 4 gebildet wird, an deren Umfang - wie besonders in Fig.2 sichtbar - zwei Permanentmagnete 5 und 6 eingelassen sind.

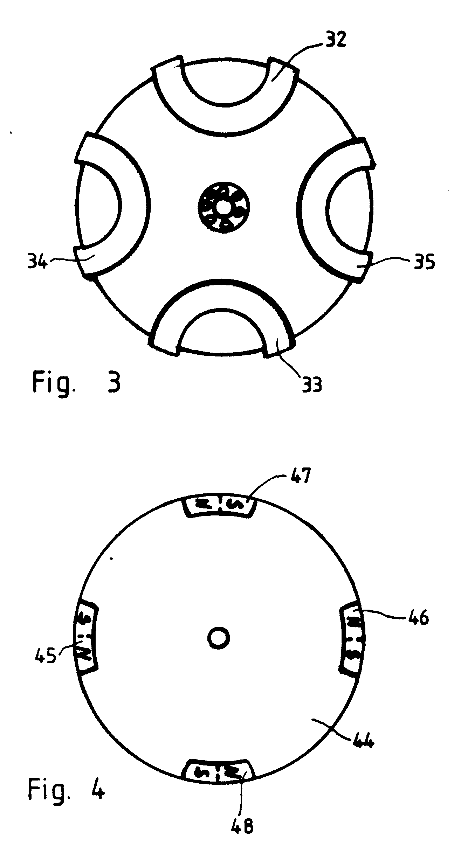

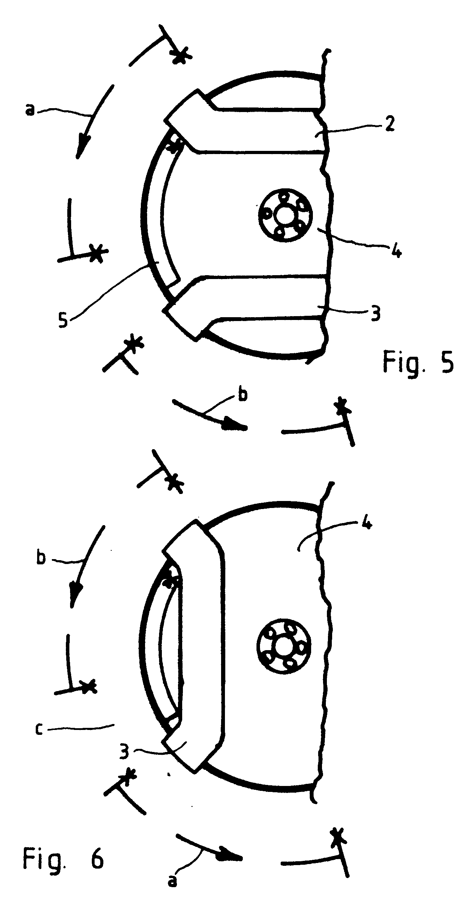

In den Fig.3 und 4 ist ein Ausführungsbeispiel gezeigt, bei dem der Stator vier Spulen 32,33,34,35 und der Rotor 44 vier Permanentmagnete 45,46,47,48 aufweist.

Anhand der Fig.5 und 6 soll nun die Funktion eines Motors mit zwei elektrischen Spulen 2,3 und zwei Permanentmagneten 5,6 erläutert werden.

In beiden Figuren ist mit a bzw. b der Arbeitsweg, den der Rotor zurücklegt bezeichnet. Beide Spulen sind an eine Gleichspannung gelegt, wodurch innerhalb und außerhalb der Spulen ein Magnetfeld entsteht, das zusammen mit dem Magnetfeld der Permanentmagnete des Rotors diesem eine Drehbewegung aufzwingt. Die Stromzufuhr zu den beiden Spulen 2,3 wird dabei so gesteuert, daß der Stromimpuls genau mit dem Zyklus des Arbeitsweges des Rotors übereinstimmt. Im Zwischenraum c zwischen den beiden Arbeitswegen a,b stehen die beiden Spulen 2,3 nicht unter Spannung; der Rotor dreht sich aber infolge seines Schwungmomentes über die Strecke c weiter. Es ist aber - insbesondere bei der Verwendung als Motor - auch möglich, zwei parallele und um einen wenigstens annähernd c entsprechenden Winkelbetrag gegeneinander verdrehte Maschinensysteme anzuordnen, wodurch eine Fehlstelle ausgeschlossen wird.

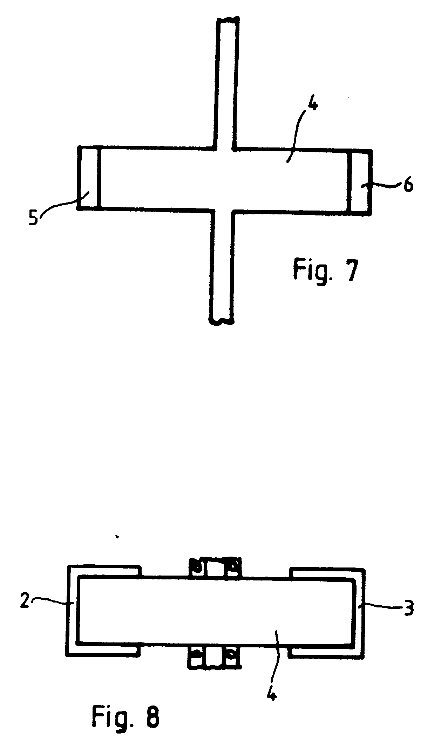

In Fig.7 ist ein Rotor 4 im Schnitt dargestellt, mit zwei Permanentmagneten 5 und 6, die in den Umfang der Rotorscheibe eingelassen sind; sie nehmen dabei die ganze Breite der Scheibe ein. Die beiden elektrischen Spulen 2 und 3 sind mit nur sehr geringem Abstand über den Außenumfang gelegt und um 90° umgelegt, damit auch die Längsseiten der Magnete von den Windungen der Spulen eingeschlossen sind.

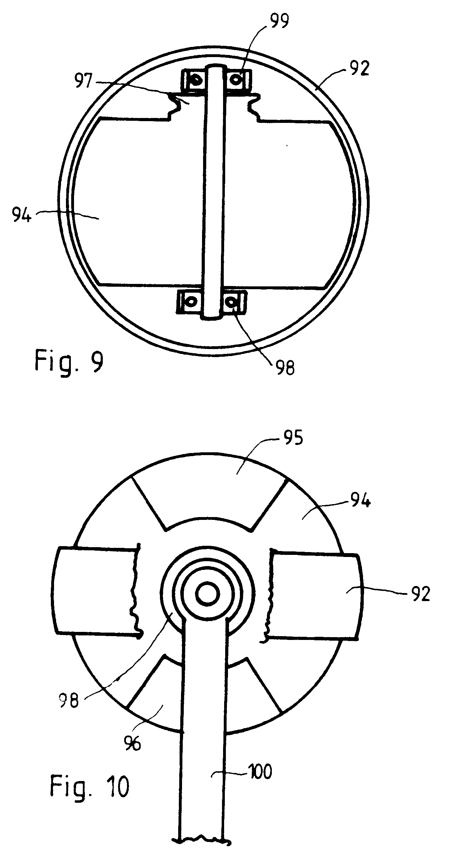

Beim Ausführungsbeispiel nach den beiden Fig.9 und 10 ist der Rotor 94 nahezu kugelförmig ausgebildet und die Spule 92 hat eine kreisringförmige Ausbildung. Der Rotor ist an beiden Seiten nur soweit abgeflacht, daß dessen beide Lager 98,99 und eine Antriebsscheibe 97 Platz finden. An den beiden Lagern 98,99 greifen Lagerstreben 100 an, mit welcher die Maschine befestigt werden kann. Die Permanentmagneten 95,96 sind der Form des Rotors angepaßt, wie dies aus Fig.10 ersichtlich ist.

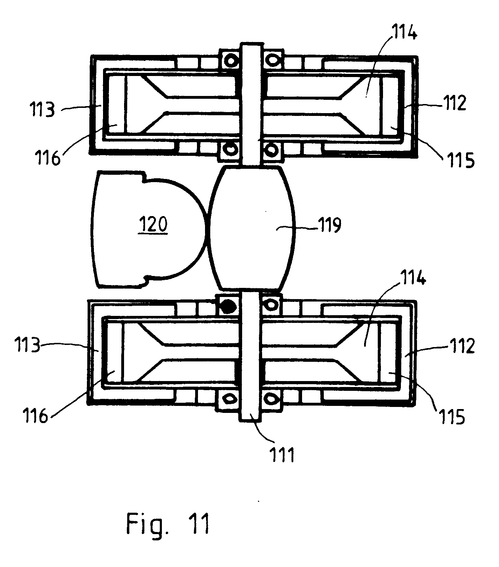

Beim Ausführungsbeispiel nach Fig.11 sind auf einer gemeinsamen Welle 111 zwei Rotoren 114 befestigt, denen jeweils ein getrennter Stator mit U-förmigen Spulen 112,113 zugeordnet ist. Zwischen den beiden Rotoren sitzt auf der Welle 111 eine Antriebsscheibe 119, die mit einem Fahrradreifen 120 in Wirkverbindung steht. Auch bei dieser Ausgestaltung sind wieder Permanentmagnete 115,116 in den Umfang des Rotors eingelassen.

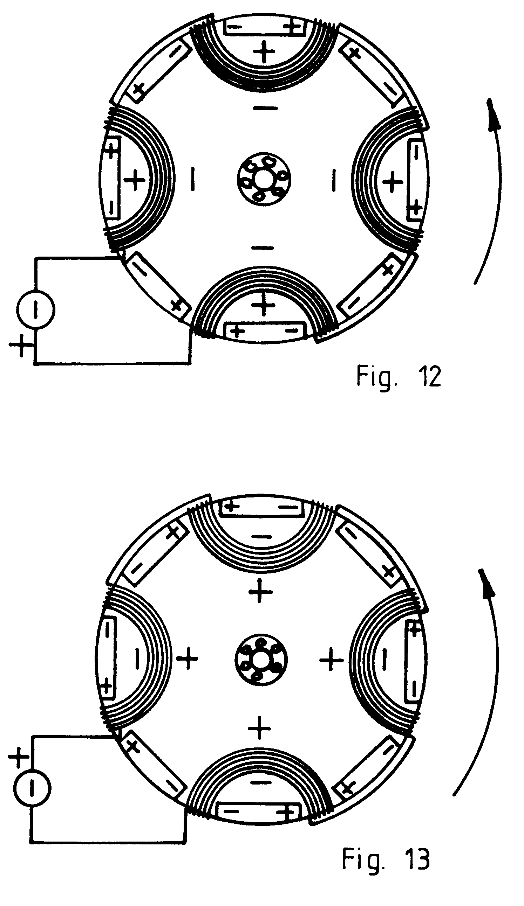

In den beiden Fig.12 und 13 ist ein elektrischer Motor in seiner elektrischen bzw. magnetischen Wirkung dargestellt. Dabei ist der Rotor in Fig.13 gegenüber der Darstellung in Fig.12 um eine Magnetteilung weitergedreht und die Stromzufuhr zu den Spulen umgepolt. Durch diese Umpolung in Abhängigkeit von der Magnetteilung wird ein nahezu gleichbleibendes Antriebsmoment erzeugt.

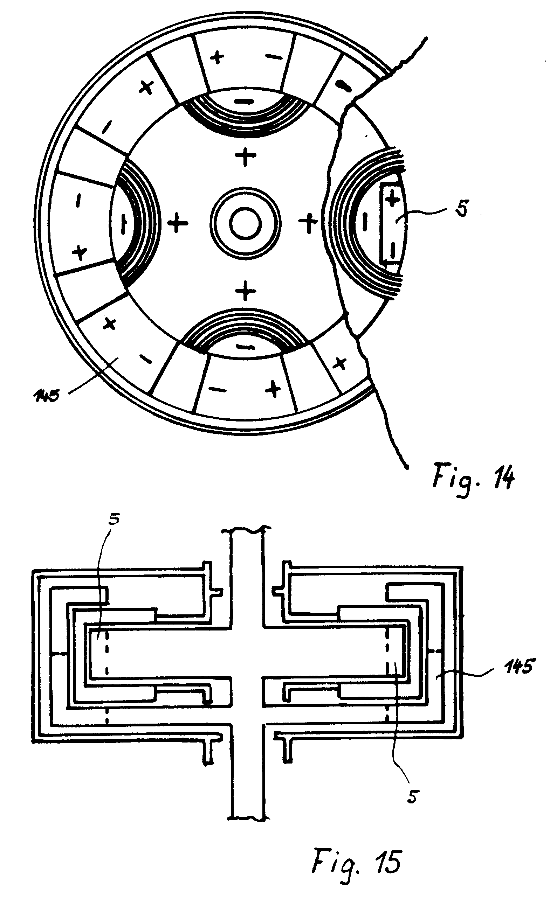

Eine weitere Ausgestaltung als Motor ist in den Fig.14 und 15 dargestellt, wobei ein mit Dauermagneten 5 versehener Innenläufer vorgesehen ist, der auf einer gemeinsamen Welle mit einem Außenläufer befestigt ist, welcher Dauermagnete 145 aufweist. Zwischen beiden synchron miteinander laufenden Magnetanordnungen sitzen feststehende Spulen 2, die im stromdurchflossenen Zustand ebenfalls ein Magnetfeld erzeugen, das durch Stromumpolung ständig umgesteuert wird. Dadurch wird die anziehende- bzw. abstoßende Kraft zwischen den Spulen und den Magneten auf einen optimalen Wert erhöht.
Es kann dabei für verschiedene Anwendungszwecke sinnvoll sein, die inneren und die äußeren Magnete geringfügig in Umfangsrichtung zu versetzen, um noch bessere Eigenschaften des Motors zu erzielen.
Sowohl beim Einsatz als Motor als auch beim Einsatz als Generator kann es zweckmäßig sein, anstelle der äußeren Magnete Weicheisenabschnitte oder einen geschlossenen Weicheisenring anzuordnen. Bei der Anordnung von Weicheisenabschnitten kann es wiederum vorteilhaft sein, diese in Umfangsrichtung gegenüber den inneren Magneten zu versetzen.

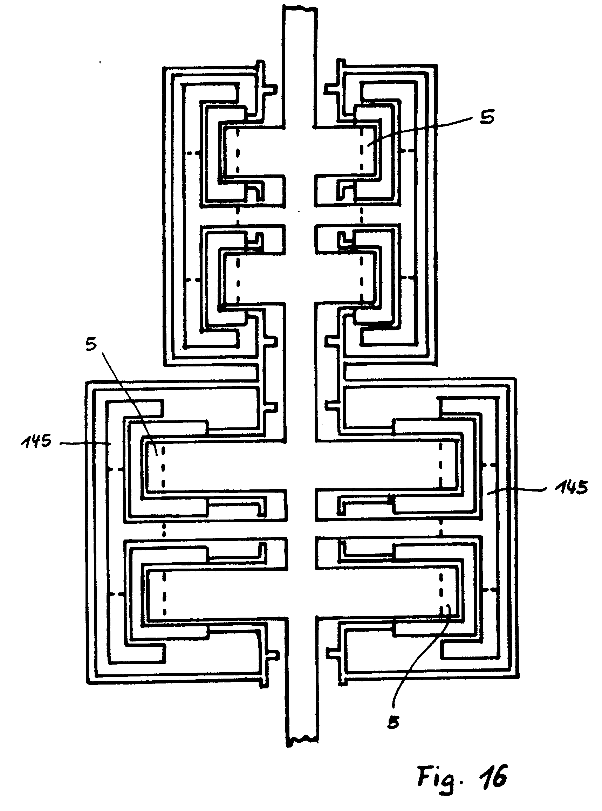

Beim Ausführungsbeispiel nach Fig.16 sind auf einer gemeinsamen Welle hintereinander zwei als Motoren ausgebildete Maschinen drehfest miteinander verbunden. Alle Teile dieser beiden Maschinen, wie innere und äußere Magneten und Spulen, haben unterschiedliche Durchmesser, wodurch diese beiden Motoren unterschiedliche Drehmomente erzeugen, wodurch eine elektrische Motoren-Getriebe-Anordnung erzielt ist. Dabei ist es durchaus möglich auch mehrere solcher unterschiedlichen Maschinen hintereinander vorzusehen, um eine mehrstufige Motoren-Getriebe-Einrichtung zu schaffen.

## Patentansprüche

1. Elektrische Maschine mit einem Rotor(4,94,114) und einem Stator, in welchen elektrische Spulen (2,3,32,33,34,35,92,112,113) bzw. Dauermagnete angeordnet sind, die sich bei der Drehbewegung des Rotors gegenseitig beeinflussen, wobei der Rotor (4,94,114) die Magnete(5,6,45,46,47,48,95,96,115,116) und der Stator die Spulen(2,3,32,33,34,35,92,112,113) enthält und die Spulen(2,3,32,33,34,35,92,112,113) ohne Eisenkern ausgebildet sind und die einzelnen Windungen wenigstens in einem Abschnitt der Spule senkrecht zur Längsachse der Magnete angeordnet sind, wobei sich wenigstens ein Abschnitt der Spulen quer über den Rotorumfang erstreckt , **dadurch** **gekennzeichnet,** daß die seitlich über den Rotor vorstehenden Spulenabschnitte wenigstens annähernd rechtwinklig abgebogen sind und parallel zu den Seiten des Rotors verlaufen.

2. Elektrische Maschine nach Anspruch 1, **dadurch** **gekennzeichnet,** daß die in Reihe hintereinander liegenden Magnete (5,6,45,46,47,48,95,96,115,116) wenigstens annähernd tangential am Rotorumfang (4,94,114) angeordnet sind, und daß die doppelte Anzahl Magnete als Spulen(2,3,32,33,34,35,92,112,113) vorgesehen ist.

3. Elektrische Maschine nach Anspruch 1 oder 2, **dadurch** **gekennzeichnet**, daß sich die Dauermagnete(5,6) über die ganze Breite des Rotors erstrecken.

4. Elektrische Maschine nach einem der vorhergehenden Ansprüche, **dadurch gekennzeichnet,** daß die hintereinander liegenden Magnete jeweils mit unterschiedlicher Polung aufeinander folgen.

5. Elektrische Maschine nach einem der vorhergehenden Ansprüche, **dadurch gekennzeichnet,** daß in der Zuleitung zu den Spulen eine Umpoleinrichtung vorgesehen ist.

6. Elektrische Maschine nach einem der vorhergehenden Ansprüche, **dadurch gekennzeichnet,** daß die Spule(92) ringförmig ausgebildet ist, der Rotor(94) in seiner Außenkontur der Spulenform angepaßt ist und sowohl der Rotor als auch seine Lager(98,99) innerhalb der Spule angeordnet sind.

7. Elektrische Maschine nach einem der vorhergehenden Ansprüche, **dadurch gekennzeichnet,** daß mehrere Rotoren(114) nebeneinander angeordnet sind.

8. Elektrische Maschine nach einem der vorhergehenden Ansprüche, **dadurch gekennzeichnet,** daß auf der die Magnete tragenden Maschinenwelle ein synchron mit dem Innenläufer umlaufender Außenläufer angeordnet ist, der entweder Weicheisenabschnitte enthält, aus einem Weicheisenring besteht oder Dauermagnete enthält und dabei im übrigen aus einem unmagnetischen Werkstoff besteht.

9. Elektrische Maschine nach einem der vorhergehenden Ansprüche, **dadurch gekennzeichnet,** daß auf einer gemeinsamen Maschinenwelle hintereinander wenigstens zwei vorzugsweise als Motoren ausgebildete Maschinen angeordnet sind, die unterschiedliche Durchmesser aufweisen.

## Claims

1. Electric machine with a rotor (4, 94, 114) and a stator, in which electric coils (2, 3, 32, 33, 34, 35, 92, 112, 113) and permanent magnets are located, which influence each other when the rotor revolves, where the rotor (4 94, 114) contains the magnets (5, 6, 45, 46, 47, 48, 95, 96, 115, 116) and the stator contains the coils (2, 3, 32, 33, 34, 35, 92, 112, 113) and the coils (2, 3, 32, 33, 34, 35, 92, 113 113) do not have an iron core and the individual windings are arranged at right angles to the longitudinal axis of the magnets in at least one section of the coil, where at least one section of the coils extends across the circumference of the rotor, **wherein** the sections of the coils that project laterally beyond the rotor are bent at least approximately at right angles and extend parallel to the sides of the rotor.

2. Electric machine according to claim 1, **wherein** the magnets (5, 6, 45, 46, 47, 48, 95, 96, 115, 116) positioned in a row behind each other are located at least approximately tangentially on the circumference of the rotor (4, 94, 114) and **wherein** twice as many magnets as coils (2, 3, 32, 33, 34, 35, 92, 112, 113) are provided.

3. Electric machine according to claim 1 or 2, **wherein** the permanent magnets (5, 6) extend over the whole of the width of the rotor.

4. Electric machine according to one of the previous claims, **wherein** the magnets located behind each other have different polarity in each case.

5. Electric machine according to one of the previous claims, **wherein** a pole reversal device is provided in the supply line to the coils.

6. Electric machine according to one of the previous claims, **wherein** the coil (92) is annular, the external shape of the rotor (94) is adapted to the shape of the coil and both the rotor and its bearings (98, 99) are located inside the coil.

7. Electric machine according to one of the previous claims, **wherein** several rotors (114) are located next to each other.

8. Electric machine according to one of the previous claims, **wherein** an external armature that rotates in synchronisation with the internal armature is located on the machine shaft supporting the magnets and either contains soft iron sections or consists of a soft iron ring or contains permanent magnets and otherwise consists of a non-magnetic material.

9. Electric machine according to one of the previous claims, **wherein** at least two machines preferably in the form of motors with different diameters are located behind each other on a mutual machine shaft.

## Revendications

1. Machine électrique ayant un rotor (4, 94, 114) et un stator, dans laquelle sont disposés des bobinages électriques (2, 3, 32, 33, 34, 35, 92, 112, 113) ou et des aimants permanents, qui lors de la rotation s'influencent mutuellement, où le rotor (4, 94, 114) contient les aimants (5, 6, 45, 46, 47, 48, 95, 96, 115, 116) et le stator contient les bobinages (2, 3, 32, 33, 34, 35, 92, 112, 113) et où les bobinages (2, 3, 32, 33, 34, 35, 92, 112, 113) sont dépourvus de noyau de fer et où les différentes spires sont dans au moins un secteur du bobinage disposés perpendiculairement à l'axe longitudinal des aimants, et où au moins un secteur des bobines s'étend transversalement sur la périphérie du rotor, **caractérisée en ce que** les secteurs de bobinage faisant protubérance latéralement par rapport au rotor sont cintrés sensiblement à angle droit et s'étendent parallèlement aux côtés du rotor.

2. Machine électrique suivant la revendication 1, **caractérisée en ce que** les aimants (5, 6, 45, 46, 47, 48, 95, 96, 115, 116) montés en série les uns derrière les autres sont disposés au moins sensiblement tangentiellement sur la périphérie du rotor (4, 94, 114), et en ce qu'il est prévu un nombre d'aimants qui est le double du nombre de bobinages (2, 3, 32, 33, 34, 35, 92, 112, 113).

3. Machine électrique suivant la revendication 1 ou la revendication 2, **caractérisée en ce que** les aimants permanents (5, 6) s'étendent sur toute la largeur du rotor.

4. Machine électrique suivant l'une quelconque des revendications précédentes, **caractérisée en ce que** les aimants montés en série l'un derrière l'autre se succèdent alternativement avec des polarités inverses.

5. Machine électrique suivant l'une quelconque des revendications précédentes, **caractérisée en ce que** dans le conducteur d'alimentation des bobinages il est prévu un dispositif d'inversion de polarité.

6. Machine électrique suivant l'une quelconque des revendications précédentes, **caractérisée en ce que** le bobinage (92) est de forme annulaire, en ce que le contour extérieur du rotor (94) est adapté à la forme du bobinage et en ce que tant le rotor qu'également ses paliers (98, 99) sont disposés à l'intérieur du bobinage.

7. Machine électrique suivant l'une quelconque des revendications précédentes, **caractérisée en ce que** plusieurs rotors (114) sont disposés côte à côte.

8. Machine électrique suivant l'une quelconque des revendications précédentes, **caractérisée en ce que** sur l'arbre de la machine qui porte les aimants est disposé un rotor extérieur tournant en synchronisme avec le rotor intérieur, rotor extérieur qui soit contient des secteurs en fer doux, soit est constitué d'un anneau de fer doux, soit contient des aimants permanents et qui par ailleurs est constitué d'un matériau non magnétique.

9. Machine électrique suivant l'une quelconque des revendications précédentes, **caractérisée en ce que** sur un arbre de machine commun sont disposées l'un derrière l'autre au moins deux machines ayant de préférence la forme de moteurs, qui présentent des diamètres différents.
